# EUROPÄISCHE PATENTSCHRIFT

(11) **EP 2 988 593 B1**
(45) Veröffentlichungstag und Bekanntmachung des Hinweises auf die Patenterteilung: **14.06.2017**
(21) Anmeldenummer: 14714732.6
(22) Anmeldetag: 03.04.2014
(51) Int. Cl.: A01M 7/00, G01F 25/00

(54) **MOBILE DOSIERVORRICHTUNG FÜR EIN WIRKSTOFFMITTEL UND VERFAHREN ZUM DOSIEREN EINES WIRKSTOFFMITTELS**
MOBILE DOSING DEVICE FOR AN ACTIVE INGREDIENT AND METHOD FOR DOSING OF AN ACTIVE INGREDIENT
DISPOSITIF DE DOSAGE MOBILE POUR UNE SUBSTANCE ACTIVE ET PROCÉDÉ DE DOSAGE D'UNE SUBSTANCE ACTIVE

(30) Priorität: 23.04.2013 EP 13164905
(43) Veröffentlichungstag der Anmeldung: 02.03.2016
(73) Patentinhaber: BASF SE, 67056 Ludwigshafen am Rhein (DE)
(72) Erfinder: WEGKAMP, Heinz-Gerd, 68623 Lampertheim (DE); BRUDER, Thomas, 69257 Wiesenbach (DE)
(86) Internationale Anmeldenummer: PCT/EP2014/056678
(87) Internationale Veröffentlichungsnummer: WO 2014/173649

(56) Entgegenhaltungen:
- GB-A- 2 315 974
- US-A- 4 865 255
- US-A- 5 157 968
- US-A- 5 665 910
- US-A1- 2007 083 293

## Beschreibung

Die vorliegende Erfindung betrifft eine mobile Dosiervorrichtung für ein Wirkstoffmittel, insbesondere ein Pflanzenschutzmittel. Die Dosiervorrichtung umfasst ein Gestell mit einer Einrichtung zur Aufnahme eines Wirkstoffmittelbehälters. Ferner umfasst sie zumindest ein drehbar an dem Gestell gelagertes Rad zum Bewegen des Gestells auf einem Untergrund und eine Wiegeeinrichtung zur Ermittlung der entnommenen und/oder zu dosierten Menge von Wirkstoffmitteln. Die Erfindung betrifft ferner ein Verfahren zum Dosieren eines Wirkstoffmittels, insbesondere eines Pflanzenschutzmittels, mittels einer Dosiervorrichtung

Es sind landwirtschaftliche Feldspritzensysteme bekannt, welche verschiedene Dosiervorrichtungen verwenden. Beispielsweise werden die Wirkstoffmittel aus einem Wirkstoffmittelbehälter über Dosierpumpen einer Trägerflüssigkeit, die sich in der Regel in einem Flüssigkeitstank befindet, zu dosiert. In der Leitung, über welche das Wirkstoffmittel zu dosiert wird, ist ein Durchflussmesser angeordnet. Mittels dieses Durchflussmessers wird die zu dosierte Menge von Wirkstoffmitteln ermittelt. Wenn jedoch relativ kleine Mengen Wirkstoffmittel pro Zeiteinheit zu dosiert werden, sind die ermittelten Messwerte ungenau.

Aus der US 5,665,910 ist eine landwirtschaftliche Einheit zum Ausbringen von Wirkstoffmitteln bekannt, die eine Messeinrichtung umfasst. Die Einheit wird auf einem Anhänger hinter einem Traktor hergezogen. Der Anhänger umfasst einen Wassertank und einen Tank für die Wirkstoffmittel. Eine Messdose ist unter einer Plattform angeordnet, welche direkt mit einer Aufnahme für den Wirkstoffmittelbehälter verbunden ist. Auf diese Weise kann die Messdose die Wirkstoffmittelmenge in dem Wirkstoffmittelbehälter überwachen, während der Anhänger über das Feld gezogen wird. Das Wirkstoffmittel wird über eine Sprühvorrichtung auf das zu behandelnde Feld gesprüht.

In der US 2007/083293 A1 wird eine Vorrichtung vorgeschlagen, durch die eine definierte Mischung verschiedener Stoffe hergestellt und ausgebracht werden kann, wobei Daten hierzu aufgezeichnet werden. Beim Ausbringen des Materials wird dabei mittels einer Waage eine Veränderung des Gewichts der Behälter mit dem Material erfasst.

Der Erfindung liegt die Aufgabe zugrunde, eine genauere Ermittlung der zu dosierten oder entnommenen Menge von Wirkstoffmittel zu ermöglichen.

Erfindungsgemäß wird diese Aufgabe durch eine mobile Dosiervorrichtung mit den Merkmalen des Anspruchs 1 und ein Verfahren mit den Merkmalen des Anspruchs 14 gelöst. Weitere Ausgestaltungen und Weiterbildungen ergeben sich aus den Merkmalen der abhängigen Ansprüche.

Die erfindungsgemäße mobile Dosiervorrichtung ist dadurch gekennzeichnet, dass die Aufnahmeeinrichtung hängend an der Wiegeeinrichtung befestigt ist. Mittels der Wiegeeinrichtung kann hierdurch das Gewicht des mit der Aufnahmeeinrichtung gekoppelten Wirkstoffmittelbehälters sehr genau ermittelt werden. Insbesondere kann das Gewicht der Wirkstoffmittel bestimmt werden, welche in einem bestimmten Zeitintervall dem Wirkstoffmittelbehälter entnommen worden sind. Hieraus kann dann das entnommene Volumen an Wirkstoffmitteln berechnet werden.

Gegenüber einem Durchflussmesser hat die Wiegeeinrichtung der erfindungsgemäßen Dosiervorrichtung den Vorteil, dass über große Zeiträume und/oder Zeitintervalle die tatsächlich entnommene und/oder zu dosierte Menge von Wirkstoffmitteln sehr genau ermittelt werden kann. Es können auch über sehr große Zeitintervalle sehr kleine Mengen zu dosierter und/oder entnommener Wirkstoffmittel ausgewogen werden.

Die hängende Befestigung der Aufnahmeeinrichtung an der Wiegeeinrichtung hat den Vorteil, dass die zu dosierte und/oder entnommene Wirkstoffmittelmenge auch dann sehr genau bestimmt werden kann, wenn die mobile Dosiervorrichtung nicht exakt vertikal ausgerichtet ist, sondern eine Neigung aufweist, oder wenn sie ihre Ausrichtung hinsichtlich der Vertikalen während der Entnahme von Wirkstoffmitteln leicht verändert. In solchen Fällen kommt es nämlich bei Wiegeeinrichtungen, bei welchen der Wirkstoffmittelbehälter auf einer Waage steht, zu Messfehlern.

Die mobile Dosiervorrichtung ist hinsichtlich ihrer Größe und ihres Gewichts insbesondere so ausgebildet, dass sie von einer Person ohne weiteres auf einem Untergrund bewegt werden kann, indem sie mittels des drehbar gelagerten Rades gefahren wird. An dem Gestell kann nicht nur ein Rad drehbar gelagert sein, sondern es können auch mehrere Räder, beispielsweise vier Räder, vorgesehen sein, mittels welchen die mobile Dosiervorrichtung gezogen oder geschoben werden kann.

Gemäß einer bevorzugten Ausgestaltung der mobilen Dosiervorrichtung sind jedoch an dem Gestell zwei drehbar gelagerte Räder befestigt. Die Drehachsen dieser beiden drehbar gelagerten Räder fallen insbesondere zusammen. Bevorzugt sind das Gestell und die Räder sackkarrenartig angeordnet.

Unter einer Sackkarre wird üblicherweise eine zweirädrige Karre zur Beförderung von Lasten verstanden, bei der die Radnabe mechanisch zugleich Hebeldrehpunkt ist. Die Sackkarre kann somit um diesen Hebeldrehpunkt geschwenkt werden, so dass die Sackkarre dann nur noch mit den zwei Rädern den Untergrund berührt. Sodann kann die Sackkarre mittels der Räder geschoben werden.

Bei der sackkarrenartigen Ausbildung der mobilen Dosiervorrichtung kann diese einen Wirkstoffmittelbehälter aufnehmen. Wird die Dosiervorrichtung nicht bewegt, steht sie mit den zwei Rädern und zumindest einer weiteren Stütze stabil auf dem Untergrund. Die Stütze kann dabei als horizontale Strebe ausgebildet sein. Diese Stütze bzw. Strebe dient dabei nicht nur der Stabilität der Dosiervorrichtung, sie verhindert auch, dass die Dosiervorrichtung von alleine wegrollt, wenn sie nicht von einer Person oder auf andere Weise gehalten wird.

Wenn eine Person die mobile Dosiervorrichtung bewegen will, wird das Gestell der Dosiervorrichtung um die Achse der beiden Räder gekippt, so dass die Dosiervorrichtung dann nur noch mit den beiden Rädern auf dem Untergrund ruht. Daraufhin kann die Person die Dosiervorrichtung mit dem gekippten Gestell mittels der zwei Räder verfahren. Mit der mobilen Dosiervorrichtung ist es somit besonders leicht möglich, Wirkstoffmittel an verschiedenen Orten, bei verschiedenen Untergründen beispielsweise in einen Tank zu dosieren, welcher verdünntes Wirkstoffmittel aufnehmen soll. Dabei ergibt sich das Problem, dass die mobile Dosiervorrichtung in Abhängigkeit von dem Untergrund, auf welchem sie steht, nicht immer gleich zur Vertikalen ausgerichtet ist. Um auch unter diesen Bedingungen das Gewicht bzw. die Menge des zu dosierten Wirkstoffmittels ermitteln zu können, ist die Aufnahmeeinrichtung mit dem Wirkstoffmittelbehälter erfindungsgemäß hängend an der Wiegeeinrichtung befestigt. Auf diese Weise richtet sich die Aufnahmeeinrichtung mit dem Wirkstoffmittelbehälter automatisch exakt zur Vertikalen aus, so dass das Gewicht unter immer denselben Bedingungen mittels der Wiegeeinrichtung ermittelt wird.

Gemäß einer Ausgestaltung der erfindungsgemäßen Dosiervorrichtung ist die Aufnahmeeinrichtung über einen Hebemechanismus mit dem Gestell gekoppelt. Mit dem Hebemechanismus ist die Aufnahmeeinrichtung in vertikaler Richtung bewegbar. Dabei ergeben sich zwei Zustände der Aufnahmeeinrichtung: Im ersten Zustand übt die Aufnahmeeinrichtung mit dem Wirkstoffmittelbehälter im Wesentlichen keine Kraft auf die Wiegeeinrichtung aus. Sie steht in diesem Fall zum Beispiel auf dem Untergrund oder einer festen Bodenplatte der Dosiervorrichtung. Mittels des Hebemechanismus kann die Aufnahmeeinrichtung von diesem ersten Zustand in den zweiten Zustand gebracht werden. In diesem zweiten Zustand hängt die Aufnahmeeinrichtung mit dem Wirkstoffmittelbehälter an der Wiegeeinrichtung und übt somit eine Gewichtskraft auf diese aus. In diesem zweiten Zustand misst die Wiegeeinrichtung das Gewicht der Aufnahmeeinrichtung und des Wirkstoffmittelbehälters, wenn dieser von der Aufnahmeeinrichtung aufgenommen ist, sowie des in dem Wirkstoffmittelbehälter befindlichen Wirkstoffmittels. Wenn in diesem zweiten Zustand Wirkstoffmittel entnommen wird, kann mittels der Wiegeeinrichtung das entnommene Gewicht und damit die entnommene Menge an Wirkstoffmitteln bestimmt werden.

Der Hebemechanismus kann die Aufnahmeeinrichtung mechanisch anheben. Beispielsweise können eine Spindel und eine Kurbel vorgesehen sein, mit denen der Nutzer die Aufnahmeeinrichtung anheben kann.

Gemäß einer anderen Ausgestaltung umfasst der Hebemechanismus einen Hubzylinder. Dieser Hubzylinder ist auf einer Seite mit einem Betätigungshebel und auf der anderen Seite mit der Aufnahmeeinrichtung gekoppelt. Bei dem Hubzylinder kann es sich beispielsweise um einen hydraulischen Hubzylinder handeln. Dabei wird der Betätigungshebel herauf und herunter bewegt. Der hydraulische Hubzylinder wandelt diese Auf-und-ab-Bewegung des Betätigungshebels in eine lineare Bewegung um, welche die Aufnahmeeinrichtung anhebt.

Alternativ kann der Hubzylinder auch mit Gasdruckfedern ausgestattet sein, um die lineare Bewegung zu erzeugen. Ferner kann es sich um einen elektromechanischen Hubzylinder handeln.

Gemäß einer weiteren Ausgestaltung umfasst der Hebemechanismus einen Elektromotor. Beispielsweise kann die Drehung des Elektromotors über ein Seil in eine lineare Bewegung der Aufnahmeeinrichtung übertragen werden.

Gemäß einer Ausgestaltung der Dosiervorrichtung umfasst die Aufnahmeeinrichtung eine Zangenanordnung, deren Zangen so ausgebildet sind, dass sie in Ausnehmungen des Wirkstoffmittelbehälters eingreifen können, um den Wirkstoffmittelbehälter hochzuheben. Mittels einer solchen Zangenanordnung ist es möglich auch Wirkstoffmittelbehälter zu verwenden, die keinen ebenen Boden haben, das heißt die nicht ohne weiteres auf einen Boden stehen können.

Gemäß einer anderen Ausgestaltung umfasst die Aufnahmeeinrichtung eine Aufnahmeplatte, welche hängend an der Wiegeeinrichtung befestigt ist und auf welche der Wirkstoffmittelbehälter gestellt werden kann. Mittels dieser Ausgestaltung der Aufnahmeeinrichtung können auch Wirkstoffmittelbehälter verwendet werden, welche keine Ausnehmungen haben, in welcher die Zangen der Zangenanordnung eingreifen können. Obwohl der Wirkstoffmittelbehälter in diesem Fall auf einer Aufnahmeplatte steht, erfolgt die Wiegung dennoch in einem hängenden Zustand. Die Aufnahmeplatte der Aufnahmeeinrichtung richtet sich somit, sobald die Aufnahmeeinrichtung mittels des Hebemechanismus angehoben wurde, automatisch exakt horizontal aus.

Gemäß einer Weiterbildung der erfindungsgemäßen Dosiervorrichtung umfasst die Aufnahmeplatte einen Fixiermechanismus zum Fixieren der hängend gelagerten Aufnahmeplatte. Bei dieser Ausgestaltung kann gegebenenfalls auf den Hebemechanismus verzichtet werden. Die Aufnahmeplatte der Aufnahmeeinrichtung wird fixiert, so dass der Wirkstoffmittelbehälter auf die Aufnahmeplatte gestellt werden kann. Die Fixierung wird dann gelöst, so dass die Aufnahmeeinrichtung mit der Aufnahmeplatte frei hängt und mittels der Wiegeeinrichtung gewogen werden kann.

Der Fixiermechanismus kann beispielsweise eine Schwenkplatte umfassen, die zum Untergrund schwenkbar ist. Auf diese Weise kann die Schwenkplatte am Untergrund fixiert werden, so dass der Wirkstoffmittelbehälter auf die Aufnahmeplatte gestellt werden kann, ohne dass sich die Aufnahmeplatte dabei hin und her bewegt.

Gemäß einer weiteren Ausgestaltung der mobilen Dosiervorrichtung umfasst diese eine Steuereinheit, in deren Speicher ein Programm gespeichert ist, mittels welchem aus den von der Wiegeeinrichtung übermittelten Messdaten die zu dosierte und/oder entnommene Wirkstoffmittelmenge ermittelbar ist. Gleichermaßen kann von der Steuereinheit auch das zu dosierte und/oder entnommene Wirkstoffmittelgewicht ermittelt werden. Um eine sehr genaue Ermittlung der tatsächlich zu dosierten und/oder entnommenen Wirkstoffmittelmenge zu erhalten, berücksichtigt die Steuereinheit bei der Berechnung, dass sich auch in den Leitungen, über welche das Wirkstoffmittel zu dosiert wird, eine Wirkstoffmittelmenge befindet. Diese Menge bleibt insbesondere bei der Ermittlung der Messwerte durch die Wiegeeinrichtung unberücksichtigt oder sie wird herausgerechnet.

Gemäß einer weiteren Ausgestaltung der erfindungsgemäßen Dosiervorrichtung umfasst diese eine Zuführleitung für die Zufuhr einer Trägerflüssigkeit und eine Dosierleitung, die über eine Kupplung mit einer Gegenkupplung des Wirkstoffmittelbehälters koppelbar sind. Bevorzugt sind bei der Dosiervorrichtung Mittel vorgesehen, mittels denen die Leitungen so zu der Position der Gegenkupplung des Wirkstoffmittelbehälters führbar sind, dass sie während der Förderung der Wirkstoffmittel aus dem Wirkstoffmittelbehälter in die Dosierleitung keine sich verändernde Kraft auf die Wiegeeinrichtung ausüben. Zum einen werden insbesondere sehr flexible Leitungen verwendet, welche von sich aus keine elastische Kraft auf den Wirkstoffmittelbehälter ausüben, an dem sie angeschlossen sind. Zum anderen werden die Leitungen geometrisch in entsprechender Weise zu der Gegenkupplung des Wirkstoffmittelbehälters hingeführt. Insbesondere erstrecken die Leitungen von der Gegenkupplung des Wirkstoffmittelbehälters horizontal weg, zumindest bei einem ersten Abschnitt.

Die Erfindung betrifft ferner ein Verfahren zum Dosieren eines Wirkstoffmittels, insbesondere eines Pflanzenschutzmittels, mittels einer Dosiervorrichtung, die eine Einrichtung zur Aufnahme eines Wirkstoffmittelbehälters, der das zu dosierenden Wirkstoffmittel enthält, und eine Wiegeeinrichtung zur Ermittlung der entnommenen und/oder zu dosierten Menge von Wirkstoffmitteln aufweist. Die Aufnahmeeinrichtung ist dabei hängend an der Wiegeeinrichtung befestigt und der Wirkstoffmittelbehälter ist mit einer Zuführleitung und einer Dosierleitung verbunden. Bei dem Verfahren wird die zu dosierende Wirkstoffmittelmenge eingegeben und/oder erfasst. Die Zuführleitung und die Dosierleitung werden mit Trägerflüssigkeit gefüllt und mittels der Wiegeeinrichtung wird das Gewicht der Aufnahmeeinrichtung und des Wirkstoffmittelbehälters einschließlich des enthaltenen Wirkstoffmittels erfasst. Anschließend wird Wirkstoffmittel aus dem Wirkstoffmittelbehälter über die Dosierleitung in einen Tank gefördert, wobei währenddessen das Gewicht der Aufnahmeeinrichtung und des Wirkstoffmittelbehälters einschließlich des enthaltenen Wirkstoffmittels von der Wiegeeinrichtung erfasst wird. Die entnommene Wirkstoffmittelmenge wird anhand des erfassten Gewichts berechnet und die Förderung des Wirkstoffmittels aus dem Wirkstoffmittelbehälter heraus wird beendet, wenn die zu dosierende Wirkstoffmittelmenge entnommen wurde. Anschließend wird die Dosierleitung so lange mit Trägerflüssigkeit, die über die Zuführleitung zugeführt wird, gespült, bis sich kein Wirkstoffmittel mehr in der Dosierleitung befindet und sich das gesamte entnommene Wirkstoffmittel im Tank befindet.

Die Erfindung wird nun anhand von Ausführungsbeispielen mit Bezug zu den Zeichnungen erläutert.

Die Figuren 1A und 1B zeigen eine Seitenansicht und eine Ansicht von hinten eines ersten Ausführungsbeispiels der erfindungsgemäßen Dosiervorrichtung,
die Figuren 2A und 2B zeigen eine Seitenansicht und eine Ansicht von hinten eines zweiten Ausführungsbeispiels der erfindungsgemäßen Dosiervorrichtung und
Figur 3 zeigt die Kopplung der erfindungsgemäßen Dosiervorrichtung mit einem Tank mit Trägerflüssigkeit und einem Tank zur Aufnahme des verdünnten Wirkstoffmittels.

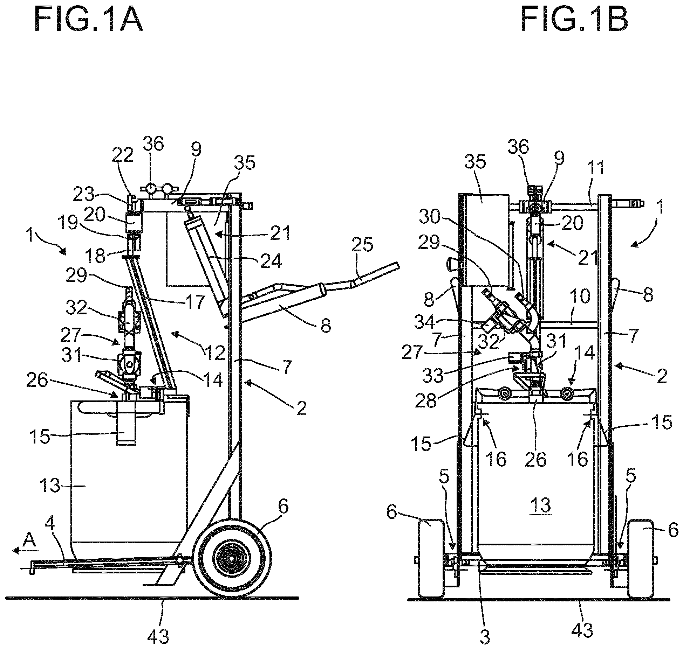

Mit Bezug zu den Figuren 1A und 1B wird ein erstes Ausführungsbeispiel der mobilen Dosiervorrichtung 1 erläutert:
Die Dosiervorrichtung 1 umfasst ein Gestell 2. Das Gestell 2 weist einen unteren Querträger 3 auf, an welchem sich untere Horizontalstreben 4 in Fahrtrichtung A der mobilen Dosiervorrichtung 1 erstrecken. An den beiden Seiten des unteren Querträgers 3 ist jeweils eine Radnabe 5 vorgesehen, an der jeweils ein Rad 6 drehbar gelagert ist. Die beiden Drehachsen der Räder 6 fallen somit zusammen.

Die unteren Horizontalstreben 4 sind so ausgebildet, dass ein Kippen der Dosiervorrichtung 1 nach vorne um die Drehachse der Räder 6 verhindert wird. Bei einem solchen Kippen wird die Dosiervorrichtung 1 nach einem kleinen Kippwinkel von den Horizontalstreben 4 abgestützt.

Von dem Querträger 3 erstrecken sich senkrecht nach oben zwei Vertikalstreben 7. An den Vertikalstreben 7 sind zwei Griffe 8 befestigt. Ein Nutzer kann die sackkarrenartig ausgebildete Dosiervorrichtung 1 mittels der Griffe 8 um die Drehachse der Räder 6 nach hinten kippen und dann in Fahrtrichtung A bewegen.

Die beiden Vertikalstreben 7 sind ferner über einen mittleren Querträger 10 und einen oberen Querträger 11 miteinander verbunden. Mittig vom oberen Querträger 11 erstreckt sich eine obere Horizontalstrebe 9 nach vorne in Fahrtrichtung A. Die obere Horizontalstrebe 9 ist an den oberen Querträger 11 angelenkt, so dass sie um die Achse des oberen Querträgers 11 geschwenkt werden kann.

Die Dosiervorrichtung 1 umfasst des Weiteren eine Aufnahmeeinrichtung 12 für einen Wirkstoffmittelbehälter 13. Bei dem ersten Ausführungsbeispiel umfasst die Aufnahmeeinrichtung 12 eine Zangenanordnung 14, deren Zangen 15 in Griffmulden 16 des Wirkstoffmittelbehälters 13 eingreifen. Die mobile Dosiervorrichtung 1 kann somit zu einem auf dem Boden stehenden Wirkstoffmittelbehälter 13 gefahren werden, bis sich die geöffnete Zangenanordnung 14 bei den Griffmulden 16 des Wirkstoffmittelbehälters 13 befindet. Daraufhin kann die Zangenanordnung 14 geschlossen werden, so dass die Zangen 15 in die Griffmulden 16 eingreifen und der Wirkstoffmittelbehälter 13 zumindest in vertikaler Richtung von der Aufnahmeeinrichtung 12 gehalten wird.

Die Aufnahmeeinrichtung 12 ist mit einer Strebe 17 verbunden, welche sich schräg nach oben erstreckt und am Ende einen Haken 18 aufweist. Der Haken 18 greift in eine erste Öse 19 einer Wiegeeinrichtung 20 ein. Auf der anderen Seite weist die Wiegeeinrichtung 20 eine zweite Öse 23 auf, in welche ein Haken 22 eines Hebemechanismus 21 eingreift.

Der Hebemechanismus 21 umfasst des Weiteren einen hydraulischen Hubzylinder 24. Dieser ist mit einem Ende an dem mittleren Querträger 10 befestigt und mit dem anderen Ende an der schwenkbaren oberen Horizontalstrebe 9. Der hydraulische Hubzylinder 24 ist mit einem Betätigungshebel 25 gekoppelt. Wenn ein Nutzer diesen Betätigungshebel 25 auf und ab bewegt, verändert sich der Abstand zwischen den beiden Enden des hydraulischen Hubzylinders 24. Auf diese Weise kann die obere Horizontalstrebe 9 in Abhängigkeit von der Längserstreckung des Hubzylinders 24 um den oberen Querträger 11 geschwenkt werden, so dass sich die Höhe des Hakens 22 des Hebemechanismus 21 verändert. Auf diese Weise kann der Haken 22 von einem unteren Zustand in einen oberen Zustand bewegt werden. Im unteren Zustand des Hakens 22 kann die Zangenanordnung 14 den Wirkstoffmittelbehälter 13 in einer Position greifen, in welcher der Wirkstoffmittelbehälter 13 auf dem Untergrund 43 steht. Wird dann der Haken 22 in den oberen Zustand gebracht, indem ein Nutzer den Betätigungshebel 25 auf und ab bewegt und sich die lineare Erstreckung des hydraulischen Hubzylinders 24 vergrößert, hebt der Hebemechanismus 21 die Aufnahmeeinrichtung 12 mit dem Wirkstoffmittelbehälter 13 an. Im oberen Zustand des Hakens 22 hängt dann die Aufnahmeeinrichtung 12 mit dem Wirkstoffmittelbehälter 13 galgenartig an dem Gestell 2 der mobilen Dosiervorrichtung 1. In diesem Zustand misst die Wiegeeinrichtung 20 das Gewicht der Teile, die an der Öse 19 hängen, das heißt es wird das Gewicht der Aufnahmeeinrichtung 12, des Wirkstoffmittelbehälters 13 und des darin befindlichen Wirkstoffmittels erfasst.

Der Wirkstoffmittelbehälter 13 weist einen Entnahmestutzen 26 auf, an dem ein Dreiwegeventil 27 befestigt ist. Das Dreiwegeventil umfasst einen ersten Anschluss 28 mit einer Kupplung, mit welcher der Anschluss 28 an einer Gegenkupplung des Entnahmestutzens 26 des Wirkstoffmittelbehälters 13 befestigt ist. Ferner weist es einen zweiten Anschluss 29 auf, der im Betrieb mit einer Leitung für eine Trägerflüssigkeit, das heißt zum Beispiel mit einer Wasserleitung, verbunden wird, wie es später erläutert wird. Des Weiteren umfasst das Dreiwegeventil 27 einen dritten Anschluss 30, über welchen das entnommene Wirkstoffmittel in eine Dosierleitung gelangt, wie es auch später erläutert wird. Das Dreiwegeventil 27 umfasst des Weiteren ein elektronisch steuerbares erstes Ventil 31, welches zwischen dem ersten 28 und dem dritten Anschluss 30 angeordnet ist. Dieses erste Ventil 31 besitzt einen ersten elektrischen Anschluss 33 zum Übertragen von Steuersignalen für das erste Ventil 31. Des Weiteren ist ein zweites Ventil 32 zwischen dem zweiten Anschluss 29 einerseits und dem dritten Anschluss 30 sowie dem ersten Ventil 31 andererseits angeordnet. Auch dieses zweite Ventil 32 ist elektronisch steuerbar und weist hierfür einen zweiten elektrischen Anschluss 34 auf. Im Betrieb werden die elektrischen Anschlüsse 33 und 34 mit einer Steuereinheit 35 der Dosiervorrichtung 1 verbunden.

Die Dosiervorrichtung 1 umfasst des Weiteren Befestigungsschellen 36. Mittels dieser Befestigungsschellen 36 können die zu den Anschlüssen 29 und 30 führenden Leitungen so positioniert werden, dass sie insbesondere während der Förderung der Wirkstoffmittel aus dem Wirkstoffmittelbehälter 13 heraus in die Dosierleitung keine sich verändernde Kraft auf die Wiegeeinrichtung 20 ausüben.

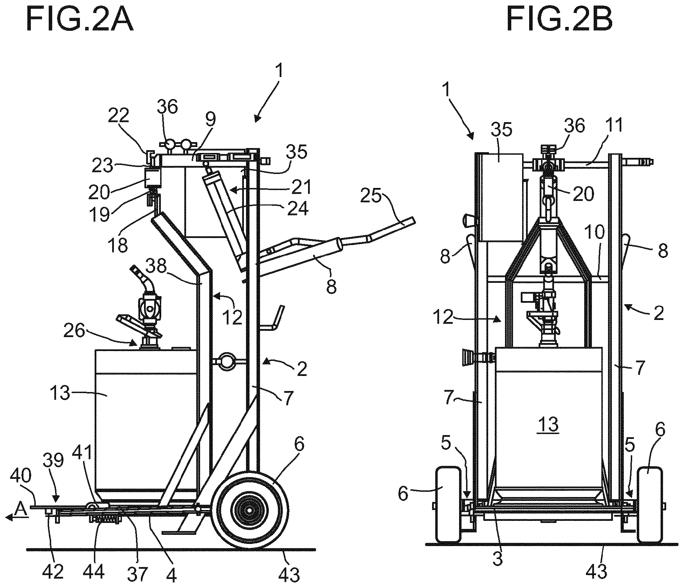

Mit Bezug zu den Figuren 2A und 2B wird ein zweites Ausführungsbeispiel der Dosiervorrichtung 1 beschrieben:
Teile der Dosiervorrichtung 1 des zweiten Ausführungsbeispiels, welche Teilen der Dosiervorrichtung 1 des ersten Ausführungsbeispiels entsprechen, sind in den Figuren 2A und 2B mit denselben Bezugszeichen bezeichnet. Sie besitzen dieselbe Funktion und Anordnung und werden daher im Folgenden nicht nochmals erläutert.

Die Dosiervorrichtung 1 des zweiten Ausführungsbeispiels unterscheidet sich von der Dosiervorrichtung 1 des ersten Ausführungsbeispiels in der Art der hängenden Befestigung des Wirkstoffmittelbehälters 13 an der Wiegeeinrichtung 20. Die Aufnahmeeinrichtung 12 umfasst in diesem Fall eine horizontale Aufnahmeplatte 37, auf welche der Wirkstoffmittelbehälter 13 gestellt werden kann. Die horizontale Aufnahmeplatte 37 ist über einen Arm 38 mit dem Haken 18 verbunden, welcher in die Öse 19 der Wiegeeinrichtung 20 eingreift.

Die Aufnahmeeinrichtung 12 umfasst des Weiteren einen Fixiermechanismus 39, welcher bei der horizontalen Aufnahmeplatte 37 angeordnet ist. Dieser Fixiermechanismus 39 umfasst eine Schwenkplatte 40, welche über ein Gelenk 41 am vorderen Ende der horizontalen Aufnahmeplatte 37 angelenkt ist. Die Schwenkplatte 40 wird von einer Feder 44 in einer ersten Stellung gehalten, bei der sie sich horizontal von der Aufnahmeplatte 37 weg erstreckt. Der Nutzer kann nun auf das vordere Ende der Schwenkplatte 40 treten und die Schwenkplatte 40 gegen die Kraft der Feder 44 nach unten schwenken, bis ein Fixiervorsprung 42 der Schwenkplatte 40 in den Untergrund 43 eingreift. Die Aufnahmeeinrichtung 12 kann nun nicht mehr hin- und herschwenken. In diesem Zustand kann der Wirkstoffmittelbehälter 13 auf die horizontale Aufnahmeplatte 37 gestellt werden. Anschließend gibt der Nutzer die Schwenkplatte 40 wieder frei, so dass sie aufgrund der Kraft der Feder 44 zurück nach oben schwenkt. In diesem Zustand hängt dann die Aufnahmeeinrichtung 12 mit dem Wirkstoffmittelbehälter 13 galgenartig an der Öse 19 der Wiegeeinrichtung 20. Aus diesem Grund ist der Hebemechanismus 21 bei dem zweiten Ausführungsbeispiel der Dosiervorrichtung 1 optional. Der Hebemechanismus 21 ist an sich nicht erforderlich, da die Aufnahmeeinrichtung 21 bereits frei an der Öse 19 der Wiegeeinrichtung 20 hängt. Durch den Fixiermechanismus 39 kann ein freies Schwingen der Aufnahmeeinrichtung 12 jedoch verhindert werden.

Bei dem in den Figuren 2A und 2B gezeigten Ausführungsbeispiel ist jedoch dennoch ein Hebemechanismus 21 wie beim ersten Ausführungsbeispiel der Dosiervorrichtung 1 vorgesehen. Die Aufnahmeeinrichtung 12 kann somit auch bei diesen Ausführungsbeispiel der Dosiervorrichtung 1 auf und ab bewegt werden. Beispielsweise kann die Aufnahmeeinrichtung 12 so weit hinunterbewegt werden, dass die horizontale Aufnahmeplatte 37 auf dem Untergrund 43 aufliegt. Hierdurch kann eine noch bessere Fixierung der Aufnahmeeinrichtung 12 erreicht werden. Des Weiteren kann der Hebemechanismus 21 dazu genutzt werden Unebenheiten des Untergrunds 43 auszugleichen. Wenn die mobile Dosiervorrichtung 1 zu einer Position bewegt wird, bei welcher aufgrund des unebenen Untergrunds die horizontale Aufnahmeplatte 37 zum Aufliegen kommen würde, kann mittels des Hebemechanismus 21 die Aufnahmeplatte 37 mit dem Wirkstoffmittelbehälter 13 weiter angehoben werden.

Die Anschlüsse an dem Entnahmestutzen 26 des Wirkstoffmittelbehälters 13 können dieselben sein, wie beim ersten Ausführungsbeispiel, so dass sie nicht erneut erläutert werden.

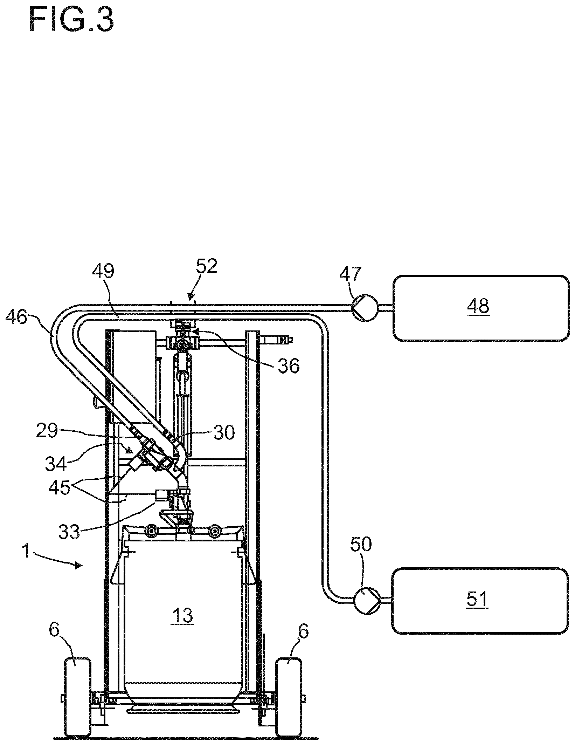

Im Folgenden wird mit Bezug zu Figur 3 ein Ausführungsbeispiel des erfindungsgemäßen Verfahrens zum Dosieren eines Wirkstoffmittels mit Hilfe der Dosiervorrichtung 1 beschrieben:
Die Dosiervorrichtung 1 wird zunächst wie eine Sackkarre zu einem mit Wirkstoff gefüllten Wirkstoffmittelbehälter 13 gefahren. Der Wirkstoffmittelbehälter 13 kann beispielsweise ein Pflanzenschutzmittel enthalten.

Beim ersten Ausführungsbeispiel der Dosiervorrichtung 1 wird der Wirkstoffmittelbehälter 13 mittels der Zangenanordnung 14 an der Aufnahmeeinrichtung 12 befestigt und dann mittels des Hebemechanismus 21 nach oben bewegt, so dass er an der Wiegeeinrichtung 20 hängt. Bei der Dosiervorrichtung 1 des zweiten Ausführungsbeispiels wird der Wirkstoffmittelbehälter 13 auf die mittels des Fixiermechanismus 39 fixierte horizontale Aufnahmeplatte 37 gestellt. Anschließend wird die Fixierung der Aufnahmeplatte 37 am Untergrund 43 gelöst und die Aufnahmeeinrichtung 12 gegebenenfalls mittels des Hebemechanismus 21 weiter nach oben bewegt.

Nun wird der an der Dosiervorrichtung 1 hängende Wirkstoffmittelbehälter 13 wie eine Sackkarre von einem Nutzer zu dem Ort gefahren, bei dem der eigentliche Dosiervorgang erfolgen soll. Die Steuereinheit 35 ist in diesem Fall über elektrische Leitungen 45 mit den elektrischen Anschlüssen 33 und 34 der beiden Ventile 31 und 32 des Dreiwegeventils 27 verbunden. Der Nutzer kann in die Steuereinheit 35 das spezifische Gewicht des Wirkstoffmittels eingeben, welches sich in dem Wirkstoffmittelbehälter 13 befindet. Alternativ kann das spezifische Gewicht und auch die Art des Wirkstoffmittels per Funk an die Steuereinheit 35 von einem elektronischen Etikett des Wirkstoffmittelbehälters 13 übertragen werden. Hierfür kann beispielsweise ein RFID-System vorgesehen sein. Die Steuereinheit 35 ist über eine elektrische Leitung des Weiteren mit der Wiegeeinrichtung 20 verbunden. Die Wiegeeinrichtung 20 kann kontinuierlich Messdaten zu dem Gewicht, welches an der Öse 19 der Wiegeeinrichtung 20 hängt an die Steuereinheit 35 übertragen.

Der zweite Anschluss 29 des Dreiwegeventils 27 ist über eine Zuführleitung 46 mit einem Tank 48 für eine Trägerflüssigkeit verbunden. Bei der Trägerflüssigkeit kann es sich insbesondere um Wasser handeln. In der Zuführleitung 46 kann bei Bedarf eine Pumpe 47 angeordnet sein, welche die Trägerflüssigkeit aus dem Tank 48 zu dem Dreiwegeventil 27 fördert.

An dem dritten Anschluss 30 des Dreiwegeventils 27 ist eine Dosierleitung 49 angeschlossen, welche zu einem Tank 51 führt, welcher das Gemisch aus der Trägerflüssigkeit und dem Wirkstoffmittel aufnehmen soll. Die Leitungen 46 und 49 sind bei einer Schlauchführung 52 fixiert, welche an den Befestigungsschellen 36 befestigt ist. Die Leitungen 46 und 49 werden auf diese Weise so zu dem Dreiwegeventil 27 geführt, dass sie keine sich verändernde Gewichtskraft auf die Aufnahmeeinrichtung 12 ausüben, während Flüssigkeit durch die Leitungen 46 und 49 gefördert wird.

Bei der Steuervorrichtung 35 gibt der Nutzer nun die Menge des Wirkstoffmittels ein, welche in dem Tank 51 gefördert werden soll. Ferner gibt er ggf. die Menge an Trägerflüssigkeit an, welche aus dem Tank 48 in den Tank 51 gefördert werden soll. Diese Mengen können von der Steuereinheit 35 auch automatisch mittels gespeicherter Werte und den Daten zu der Art des Wirkstoffmittels und dem spezifischen Gewicht des Wirkstoffmittels berechnet werden.

Der Nutzer drückt nun einen Startknopf bei der Steuereinheit 35, so dass anschließend die Dosierung des Wirkstoffmittels vollständig automatisch abläuft. Der gesamte Dosiervorgang wird von der Steuereinheit 35 gesteuert. Zunächst öffnet die Steuereinheit 35 das zweite Ventil 31. Das erste Ventil 32 befindet sich zunächst im geschlossenen Zustand. Gegebenenfalls wird außerdem die Pumpe 47 gestartet, so dass Trägerflüssigkeit von dem Tank 48 in den Tank 51 gefördert wird. Auf diese Weise werden die Leitungen 46 und 49 vollständig gefüllt und außerdem durchspült. Dieses Befüllen der Leitungen 46 und 49 ist wichtig, um die Dosiermenge des Wirkstoffmittels anschließend durch die Wiegeeinrichtung 20 exakt bestimmen zu können.

Nun schließt die Steuervorrichtung 35 das zweite Ventil 31, so dass keine Trägerflüssigkeit mehr gefördert wird. In diesem Zustand überträgt die Wiegeeinrichtung 20 einen Anfangsmesswert für das Gewicht, welches an der Öse 19 hängt, an die Steuereinheit 35. Die Steuereinheit 35 öffnet nun das erste Ventil 32. Das zweite Ventil 31 bleibt geschlossen. Gegebenenfalls wird die Pumpe 50 gestartet, so dass Wirkstoffmittel aus dem Wirkstoffmittelbehälter 13 über die Dosierleitung 49 in den Tank 51 gefördert wird. Dabei werden fortwährend Messwerte für das Gewicht von der Wiegeeinrichtung 20 an die Steuereinheit 35 übertragen. Während der Entnahme des Wirkstoffmittels und der Dosierung in den Tank 51 ruht die Dosiervorrichtung 1. Nur bei ruhender Dosiervorrichtung 1 kann das aus dem Wirkstoffmittelbehälter 13 entnommene Gewicht exakt ermittelt werden. Sobald das gewünschte Gewicht bzw. die daraus errechnete gewünschte Menge an Wirkstoffmitteln entnommen wurden, schließt die Steuereinheit 35 das erste Ventil 31, so dass kein Wirkstoffmittel mehr entnommen wird.

Anschließend wird das zweite Ventil 32 wieder geöffnet und gegebenenfalls die Pumpe 47 gestartet, so dass Trägerflüssigkeit von dem Tank 48 in den Tank 51 gefördert wird. Auf diese Weise wird die Dosierleitung 49 so lange gespült, bis sich kein Wirkstoffmittel mehr in der Dosierleitung 49 befindet und das gesamte entnommene Wirkstoffmittel sich im Tank 51 befindet.

Wenn in dem Tank 51 eine bestimmte Wirkstoffmittelkonzentration in der Trägerflüssigkeit erreicht werden soll, wird noch so viel Trägerflüssigkeit von dem Tank 48 in den Tank 51 gefördert, bis die gewünschte Konzentration erzeugt worden ist. Hierfür kann sich beispielsweise in dem Tank 51 ein Füllstandsmesser befinden, welcher mit der Steuereinheit 35 gekoppelt ist, so dass die Steuereinheit 35 das Gesamtvolumen des Gemisches aus Trägerflüssigkeit und Wirkstoffmittel ermitteln kann.

Der Abschluss des Dosiervorgangs kann dem Nutzer durch ein Signal, beispielsweise ein akustisches oder visuelles Signal, angezeigt werden. Der Nutzer kann die Leitungen 46 und 49 nun wieder von dem Dreiwegeventil 27 lösen und die Dosiervorrichtung 1 wie eine Sackkarre von den Tanks 48 und 51 wegbewegen. Der Tank 51 kann sich beispielsweise auf einem Anhänger für einen Traktor befinden. Er kann nun über das Feld bewegt werden. Mittels eines landwirtschaftlichen Feldspritzensystems kann das Gemisch aus der Trägerflüssigkeit mit dem Wirkstoffmittel dann auf dem Feld auf an sich bekannte Weise versprüht werden.

### Bezugszeichenliste

- 1: Dosiervorrichtung
- 2: Gestell
- 3: unterer Querträger
- 4: untere Horizontalstreben
- 5: Radnaben
- 6: Räder
- 7: Vertikalstreben
- 8: Griffe
- 9: obere Horizontalstrebe
- 10: mittlerer Querträger
- 11: oberer Querträger
- 12: Aufnahmeeinrichtung
- 13: Wirkstoffmittelbehälter
- 14: Zangenanordnung
- 15: Zangen
- 16: Griffmulden
- 17: Strebe
- 18: Haken
- 19: erste Öse
- 20: Wiegeeinrichtung
- 21: Hebemechanismus
- 22: Haken
- 23: zweite Öse
- 24: Hubzylinder
- 25: Betätigungshebel
- 26: Entnahmestutzen
- 27: Dreiwegeventil
- 28: erster Anschluss des Dreiwegeventils
- 29: zweiter Anschluss des Dreiwegeventils
- 30: dritter Anschluss des Dreiwegeventils
- 31: erstes Ventil
- 32: zweites Ventil
- 33: erster elektrischer Anschluss
- 34: zweiter elektrischer Anschluss
- 35: Steuereinheit
- 36: Befestigungsschellen
- 37: horizontale Aufnahmeplatte
- 38: Arm
- 39: Fixiermechanismus
- 40: Schwenkplatte
- 41: Gelenk
- 42: Fixiervorsprung
- 43: Untergrund
- 44: Feder
- 45: elektrische Leitungen
- 46: Zuführschlauch
- 47: Pumpe
- 48: Tank für Trägerflüssigkeit
- 49: Schlauch
- 50: Pumpe
- 51: Tank für verdünntes Wirkstoffmittel
- 52: Schlauchführung

## Patentansprüche

1. Mobile Dosiervorrichtung (1) für ein Wirkstoffmittel, insbesondere ein Pflanzenschutzmittel, mit
einem Gestell (2) mit einer Einrichtung (12) zur Aufnahme eines Wirkstoffmittelbehälters (13),
zumindest einem drehbar an dem Gestell (2) gelagerten Rad (6) zum Bewegen des Gestells (2) auf einen Untergrund (43) und
einer Wiegeeinrichtung (20) zur Ermittlung der entnommenen und/oder zu dosierten Menge von Wirkstoffmitteln,
**dadurch gekennzeichnet,**
**dass** die Aufnahmeeinrichtung (12) hängend an der Wiegeeinrichtung (20) befestigt ist.

2. Mobile Dosiervorrichtung (1) nach Anspruch 1,
**dadurch gekennzeichnet,**
**dass** an dem Gestell (2) zwei drehbar gelagerte Räder (6) befestigt sind, deren Drehachsen zusammenfallen.

3. Mobile Dosiervorrichtung (1) nach Anspruch 2,
**dadurch gekennzeichnet,**
**dass** das Gestell (2) und die Räder (6) sackkarrenartig angeordnet sind.

4. Mobile Dosiervorrichtung (1) nach einem der vorhergehenden Ansprüche,
**dadurch gekennzeichnet,**
**dass** die Aufnahmeeinrichtung (12) über einen Hebemechanismus (21) mit dem Gestell (2) gekoppelt ist, mittels welchem die Aufnahmeeinrichtung (12) in vertikaler Richtung bewegbar ist.

5. Mobile Dosiervorrichtung (1) nach Anspruch 4,
**dadurch gekennzeichnet,**
**dass** der Hebemechanismus (21) einen Hubzylinder (24) umfasst, welcher auf einer Seite mit einem Betätigungshebel (25) und auf der anderen Seite mit der Aufnahmeeinrichtung (12) gekoppelt ist.

6. Mobile Dosiervorrichtung (1) nach Anspruch 5,
**dadurch gekennzeichnet,**
**dass** der Hubzylinder (24) ein hydraulischer Hubzylinder ist.

7. Mobile Dosiervorrichtung (1) nach einem der vorhergehenden Ansprüche,
**dadurch gekennzeichnet,**
**dass** die Aufnahmeeinrichtung (12) eine Zangenanordnung (14) umfasst, deren Zangen (15) so ausgebildet sind, dass sie in Ausnehmungen (16) des Wirkstoffmittelbehälters (13) eingreifen können, um den Wirkstoffmittelbehälter (13) hochzuheben.

8. Mobile Dosiervorrichtung (1) nach einem der Ansprüche 1 bis 6,
**dadurch gekennzeichnet,**
**dass** die Aufnahmeeinrichtung (12) eine Aufnahmeplatte (37) umfasst, welche hängend an der Wiegeeinrichtung (20) befestigt ist und auf welche der Wirkstoffmittelbehälter (13) gestellt werden kann.

9. Mobile Dosiervorrichtung (1) nach Anspruch 8,
**dadurch gekennzeichnet,**
**dass** die Aufnahmeplatte (37) einen Fixiermechanismus (39) zum Fixieren der hängend gelagerten Aufnahmeplatte (37) umfasst.

10. Mobile Dosiervorrichtung (1) nach Anspruch 9,
**dadurch gekennzeichnet,**
**dass** der Fixiermechanismus (39) eine Schwenkplatte (40) umfasst, die zum Untergrund (43) hin schwenkbar ist.

11. Mobile Dosiervorrichtung (1) nach einem der vorhergehenden Ansprüche,
**dadurch gekennzeichnet,**
**dass** die Dosiervorrichtung (1) eine Steuereinheit (35) umfasst, in dessen Speicher ein Programm gespeichert ist, mittels welchem aus den von der Wiegeeinrichtung (20) übermittelten Messdaten die zu dosierte und/oder entnommene Wirkstoffmittelmenge ermittelbar ist.

12. Mobile Dosiervorrichtung (1) nach einem der vorhergehenden Ansprüche,
**dadurch gekennzeichnet,**
**dass** die Dosiervorrichtung (1) eine Zuführleitung (46) für die Zufuhr einer Trägerflüssigkeit und eine Dosierleitung (49) umfasst, die über eine Kupplung (28) mit einer Gegenkupplung (26) des Wirkstoffmittelbehälters (13) koppelbar sind.

13. Mobile Dosiervorrichtung (1) nach Anspruch 12,
**dadurch gekennzeichnet,**
**dass** Mittel (36, 52) vorgesehen sind, mittels denen die Leitungen (46, 49) so zu der Position der Gegenkupplung (26) des Wirkstoffmittelbehälters (13) führbar sind, dass sie während der Förderung der Wirkstoffmittel aus dem Wirkstoffmittelbehälter (13) in die Dosierleitung (49) keine sich verändernde Kraft auf die Wiegeeinrichtung (20) ausüben.

14. Verfahren zum Dosieren eines Wirkstoffmittels, insbesondere eines Pflanzenschutzmittels, mittels einer Dosiervorrichtung (1), die eine Einrichtung (12) zur Aufnahme eines Wirkstoffmittelbehälters (13), der das zu dosierenden Wirkstoffmittel enthält, und eine Wiegeeinrichtung (20) zur Ermittlung der entnommenen und/oder zu dosierten Menge von Wirkstoffmitteln aufweist, wobei die Aufnahmeeinrichtung (12) hängend an der Wiegeeinrichtung (20) befestigt ist und der Wirkstoffmittelbehälter (13) mit einer Zuführleitung (46) und einer Dosierleitung (49) verbunden ist, wobei bei dem Verfahren:
- die zu dosierende Wirkstoffmittelmenge eingegeben und/oder erfasst wird,
- die Zuführleitung (46) und die Dosierleitung (49) mit Trägerflüssigkeit gefüllt werden,
- mittels der Wiegeeinrichtung (20) das Gewicht der Aufnahmeeinrichtung (12) und des Wirkstoffmittelbehälters (13) einschließlich des enthaltenen Wirkstoffmittels erfasst wird,
- anschließend Wirkstoffmittel aus dem Wirkstoffmittelbehälter (13) über die Dosierleitung (49) in einen Tank (51) gefördert wird, wobei währenddessen das Gewicht der Aufnahmeeinrichtung (12) und des Wirkstoffmittelbehälters (13) einschließlich des enthaltenen Wirkstoffmittels von der Wiegeeinrichtung (20) erfasst wird,
- die entnommene Wirkstoffmittelmenge anhand des erfassten Gewichts berechnet wird und die Förderung des Wirkstoffmittels aus dem Wirkstoffmittelbehälter (13) heraus beendet wird, wenn die zu dosierende Wirkstoffmittelmenge entnommen wurde, und
- anschließend die Dosierleitung (49) so lange mit Trägerflüssigkeit, die über die Zuführleitung (46) zugeführt wird, gespült wird, bis sich kein Wirkstoffmittel mehr in der Dosierleitung (49) befindet und sich das gesamte entnommene Wirkstoffmittel im Tank (51) befindet.

## Claims

1. A mobile metering apparatus (1) for an active composition, in particular a crop protection composition, having
a frame (2) having a device (12) for receiving an active composition container (13),
at least one wheel (6), mounted rotatably on the frame (2), for moving the frame (2) on an underlying surface (43), and
a weighing device (20) for determining the quantity of active compositions removed and/or metered in,
**wherein**
the receiving device (12) is fastened in a suspended manner on the weighing device (20).

2. The mobile metering apparatus (1) according to claim 1,
**wherein**
two rotatably mounted wheels (6) are fastened on the frame (2), the rotation axes of said wheels (6) coinciding.

3. The mobile metering apparatus (1) according to claim 2,
**wherein**
the frame (2) and the wheels (6) are arranged in the manner of a hand truck.

4. The mobile metering apparatus (1) according to any of the preceding claims,
wherein
the receiving device (12) is coupled to the frame (2) via a lifting mechanism (21) by means of which the receiving device (12) is movable in the vertical direction.

5. The mobile metering apparatus (1) according to claim 4,
wherein
the lifting mechanism (21) comprises a lifting cylinder (24) which is coupled on one side to an actuating lever (25) and on the other side to the receiving device (12).

6. The mobile metering apparatus (1) according to claim 5,
wherein
the lifting cylinder (24) is a hydraulic lifting cylinder.

7. The mobile metering apparatus (1) according to any of the preceding claims,
wherein
the receiving device (12) comprises a tongs arrangement (14), the tongs (15) of which are formed such that they can engage in recesses (16) in the active composition container (13) in order to lift the active composition container (13).

8. The mobile metering apparatus (1) according to any of claims 1 to 6,
wherein
the receiving device (12) comprises a receiving plate (37) which is fastened in a suspended manner on the weighing device (20) and on which the active composition container (13) can be placed.

9. The mobile metering apparatus (1) according to claim 8,
**wherein**
the receiving plate (37) comprises a fixing mechanism (39) for fixing the receiving plate (37) mounted in a suspended manner.

10. The mobile metering apparatus (1) according to claim 9,
**wherein**
the fixing mechanism (39) comprises a pivot plate (40) which is pivotable toward the underlying surface (43).

11. The mobile metering apparatus (1) according to any of the preceding claims,
**wherein**
the metering apparatus (1) comprises a control unit (35), in the memory of which a program is stored, by means of which the quantity of active composition metered in and/or removed is ascertainable from the measurement data transmitted from the weighing device (20).

12. The mobile metering apparatus (1) according to any of the preceding claims,
**wherein**
the metering device (1) comprises a feed line (46) for feeding a carrier liquid and a metering line (49), said lines being couplable via a coupling (28) to a mating coupling (26) of the active composition container (13).

13. The mobile metering apparatus (1) according to claim 12,
**wherein**
means (36, 52) are provided, by means of which the lines (46, 49) are guidable to the position of the mating coupling (26) of the active composition container (13) such that, during the delivery of the active composition from the active composition container (13) into the metering line (49), they do not exert a varying force on the weighing device (20).

14. A method for metering an active composition, in particular a crop protection composition, by means of a metering apparatus (1) which has a device (12) for receiving an active composition container (13), which contains the active composition to be metered, and a weighing device (20) for determining the quantity of active compositions removed and/or metered in, the receiving device (12) being fastened in a suspended manner on the weighing device (20) and the active composition container (13) being connected to a feed line (46) and a metering line (49), where:
- the quantity of active composition to be metered is input and/or captured,
- the feed line (46) and the metering line (49) are filled with carrier liquid,
- the weight of the receiving device (12) and of the active composition container (13), including the active composition contained therein, is captured by means of the weighing device (20),
- subsequently, active composition is delivered from the active composition container (13) via the metering line (49) into a tank (51), with the weight of the receiving device (12) and the active composition container (13), including the active composition contained therein, being captured at the same time by the weighing device (20),
- the quantity of active composition removed is calculated on the basis of the captured weight and the delivery of the active composition from the active composition container (13) is ended when the quantity of active composition to be metered has been removed, and
- subsequently, the metering line (49) is flushed with carrier liquid, which is fed via the feed line (46), until no active composition is located in the metering line (49) anymore and all of the active composition removed is located in the tank (51).

## Revendications

1. Dispositif de dosage mobile (1) destiné à un agent actif, notamment un produit phytosanitaire, comprenant
un châssis (2) comportant un système (12) destiné à recevoir un réservoir d'agent actif (13),
au moins une roue (6) montée tournante sur le châssis (2) de manière à déplacer le châssis (2) sur un sol (43), et
un système de dosage (20) destiné à déterminer la quantité d'agent actif prélevée et/ou à doser, **caractérisé en ce que** le système de réception (12) est fixé suspendu au système de dosage (20).

2. Dispositif de dosage mobile (1) selon la revendication 1,
**caractérisé par** la fixation de deux roues (6) montées tournantes sur le châssis (2), dont les axes de rotation coïncident.

3. Dispositif de dosage mobile (1) selon la revendication 2,
**caractérisé en ce que** le châssis (2) et les roues (6) sont disposés à la manière de diables.

4. Dispositif de dosage mobile (1) selon l'une quelconque des revendications précédentes,
**caractérisé en ce que** le système de réception (12) est couplé au châssis (2) par l'intermédiaire d'un mécanisme de levage (21) au moyen duquel le système de réception (12) est mobile en direction verticale.

5. Dispositif de dosage mobile (1) selon la revendication 4,
**caractérisé en ce que** le mécanisme de levage (21) comprend un vérin de levage (24) qui est couplé d'un côté à un levier d'actionnement (25) et d'un autre côté au système de réception (12).

6. Dispositif de dosage mobile (1) selon la revendication 5,
**caractérisé en ce que** le vérin de levage (24) est un vérin de levage hydraulique.

7. Dispositif de dosage mobile (1) selon l'une quelconque des revendications précédentes,
**caractérisé en ce que** le système de réception (12) comprend un moyen à pinces (14) dont les pinces (15) sont conçues pour pouvoir s'engager dans des évidements (16) du réservoir d'agent actif (13) afin de soulever le réservoir d'agent actif (13).

8. Dispositif de dosage mobile (1) selon l'une quelconque des revendications 1 à 6,
**caractérisé en ce que** le système de réception (12) comprend un plateau de réception (37) qui est fixé suspendu au système de pesage (20) et sur lequel peut être placé le réservoir d'agent actif (13).

9. Dispositif de dosage mobile (1) selon la revendication 8,
**caractérisé en ce que** le plateau de réception (37) comprend un mécanisme de fixation (39) destiné à fixer le plateau de réception (37) monté suspendu.

10. Dispositif de dosage mobile (1) selon la revendication 9,
**caractérisé en ce que** le mécanisme de fixation (39) comprend un plateau pivotant (40) qui peut être amené à pivoter vers le sol (43).

11. Dispositif de dosage mobile (1) selon l'une quelconque des revendications précédentes,
**caractérisé en ce que** le dispositif de dosage (1) comprend une unité de commande (35) dont la mémoire stocke un programme au moyen duquel la quantité d'agent actif à doser et/ou prélevée peut être déterminée à partir des données de mesure transmises par le système de pesage (20).

12. Dispositif de dosage mobile (1) selon l'une quelconque des revendications précédentes,
**caractérisé en ce que** le dispositif de dosage (1) comprend une conduite d'alimentation (46) destinée à introduire un liquide porteur et une conduite de dosage (49) qui peut être raccordée par l'intermédiaire d'un raccord (28) à un raccord complémentaire (26) du réservoir d'agent actif (13).

13. Dispositif de dosage mobile (1) selon la revendication 12,
**caractérisé en ce qu'**il est prévu des moyens (36, 52) à l'aide desquels les conduites (46, 49) peuvent être acheminées jusqu'à la position du raccord complémentaire (26) du réservoir d'agent actif (13) de manière à ce qu'elles n'exercent aucune force perturbatrice sur le système de pesage (20) pendant le transport de l'agent actif en provenance du réservoir d'agent actif (13) dans la conduite de dosage (49).

14. Procédé de dosage mobile d'un agent actif, notamment d'un produit phytosanitaire, au moyen d'un dispositif de dosage (1) qui comporte un système (12) destiné à recevoir un réservoir d'agent actif (13) contenant un agent actif à doser, et un système de pesage (20) destiné à déterminer la quantité d'agents actifs prélevée et/ou à doser, dans lequel le système de réception (12) est fixé suspendu au système de pesage (20) et le réservoir d'agent actif (13) est relié à une conduite d'alimentation (46) et à une conduite de dosage (49), dans lequel, selon le procécé :
- la quantité d'agent actif à doser est fournie en entrée et/ou détectée,
- la conduite d'alimentation (46) et la conduite de dosage (49) sont remplies de liquide porteur,
- le poids du système de réception (12) et du réservoir d'agent actif (13), y compris l'agent actif contenu, est détecté au moyen du système de pesage (20),
- de l'agent actif provenant du réservoir d'agent actif (13) est ensuite transporté par l'intermédiaire de la conduite de dosage (49) dans un réservoir (51), dans lequel le poids du système de réception (12) et du réservoir d'agent actif (13), y compris l'agent actif contenu, est détecté lors de cette opération par le système de pesage (20),
- la quantité d'agent actif prélevée est calculée sur la base du poids détecté et le transport de l'agent actif en provenance du réservoir d'agent actif (13) est interrompu lorsque la quantité d'agent actif à doser a été prélevée, et
- la conduite de dosage (49) est rincée à l'aide du liquide porteur qui est délivré par l'intermédiaire de la conduite d'alimentation (46) jusqu'à ce qu'il ne reste plus d'agent actif dans la conduite de dosage (49) et que la totalité de l'agent actif prélevé se trouve dans le réservoir (51).
